(19) Europäisches Patentamt
European Patent Office
Office européen des brevets

(11) **EP 2 738 231 B1**

(12) **FASCICULE DE BREVET EUROPEEN**

(45) Date de publication et mention
de la délivrance du brevet:
**29.07.2015 Bulletin 2015/31**

(51) Int Cl.:
***C09J 133/00*** *(2006.01)*

(21) Numéro de dépôt: **13195116.2**

(22) Date de dépôt: **29.11.2013**

(54) **COMPOSITION ADHÉSIVE AQUEUSE ET SON PROCEDE DE MISE EN OEUVRE**

WÄSSRIGE KLEBEZUSAMMENSETZUNG, UND IHR VERWENDUNGSVERFAHREN

AQUEOUS ADHESIVE COMPOSITION AND METHOD FOR USING SAME

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.12.2012 FR 1261530**

(43) Date de publication de la demande:
**04.06.2014 Bulletin 2014/23**

(73) Titulaire: **BOSTIK SA**
**93210 La Plaine Saint Denis (FR)**

(72) Inventeurs:
• **Valera, Nadège**
**60300 CHAMANT (FR)**
• **Feneau, Olivier**
**60170 CARLEPONT (FR)**
• **Fabre, Cyril**
**84120 PERTUIS (FR)**

(74) Mandataire: **Hirsch & Associés**
**137, rue de l'Université**
**75007 Paris (FR)**

(56) Documents cités:
**EP-A2- 0 888 786**     **US-A1- 2011 151 249**
**US-A1- 2012 171 362**

**Description**

DOMAINE TECHNIQUE

La présente invention concerne une composition adhésive aqueuse présentant une tension superficielle inférieure à celle des compositions adhésives connues et capable de présenter un certain pourcentage d'expansion volumique lorsqu'elle est soumise à une étape de foisonnement. L'invention concerne également un procédé d'application de la composition adhésive aqueuse sur un substrat, ce procédé comprenant une étape de foisonnement.

ETAT DE LA TECHNIQUE

Il est connu que les compositions adhésives sont appliquées en couche mince sur les surfaces devant être assemblées et ce, de manière à obtenir une adhésion parfaite et un aspect uniforme et régulier du produit collé.

Diminuer la quantité de colle appliquée sur un substrat présente plusieurs avantages :

- un intérêt économique,
- un séchage plus rapide de la colle, ce qui permet d'éviter l'encrassement des outils de découpe (massicot par exemple), ainsi que le tuilage et/ou le roulage des articles laminés,
- un poids des objets collés plus faible,
- un intérêt environnemental.

Cependant, les équipements habituellement utilisés dans les procédés de collage en continu ne sont généralement pas en mesure d'appliquer les très faibles grammages de colle aqueuse qui seraient suffisants pour obtenir la qualité d'assemblage souhaitée. En général, avec ce type d'équipement, la quantité de colle utilisée est très significativement supérieure à la quantité de colle qui serait effectivement nécessaire.

A titre d'exemple, dans un procédé de lamination, un film de colle, obtenu après séchage de la composition adhésive, présentant une épaisseur comprise entre 30 et 60 microns serait suffisant, cependant, les imprécisions liées à l'équipement conduisent à un film d'épaisseur généralement plus élevée de un ou deux ordres de grandeur.

Afin de réduire la quantité de colle utilisée, les fabricants de machines destinées à appliquer une composition adhésive sur un substrat ont développé des équipements de plus en plus sophistiqués reposant sur des mécanismes coûteux tels que les systèmes Hansa Mixer.

Parallèlement, les producteurs de compositions adhésives ont augmenté la teneur en extrait sec des colles aqueuses dans le but de réduire la quantité de colle utilisée dans les procédés d'application de colle. Cela notamment afin de réduire les temps de séchage. L'augmentation de l'extrait sec induit un accroissement de viscosité, qui réduit encore l'aptitude des équipements à appliquer l'adhésif à faibles grammages sans encrassement (filant).

Par ailleurs, une diminution de la quantité de colle appliquée sur un substrat peut être obtenue en faisant mousser la composition adhésive avant application sur le substrat. Ainsi, l'absorption des colles aqueuses sur des substrats poreux tels que les substrats cellulosiques (papier, carton, ...) peut être avantageusement calibrée en fonction du degré de moussage lorsqu'il est parfaitement maîtrisé. L'adhésif moussé offre une cohésion plus faible, une plus faible viscosité, qui améliore son applicabilité et son caractère filmogène. L'adhésif moussé présente des temps ouvert et temps de prise sensiblement équivalents.

Actuellement, les principaux utilisateurs de colles aqueuses moussées utilisent des dispositifs de moussage dans lesquels un gaz, en général de l'air, est injecté ou généré au sein de la composition adhésive selon différentes techniques. Avec cette méthode, la quantité efficace de colle appliquée peut être réduite grâce à une proportion importante de gaz dans la colle moussée. La demande GB 887,078 décrit un tel procédé dans lequel le moussage est obtenu via un mélange vigoureux de composition adhésive et de gaz, pendant lequel du gaz, en particulier du fréon, est injecté pendant 10 à 30 minutes. Le mélange est de type « fouettage », ce qui nécessite d'une part, un équipement complexe (l'équipement doit permettre un contrôle précis du débit de gaz), et d'autre part, des conditions particulières (ajustement de la viscosité par l'ajout d'un agent de stabilisation de mousse) pour que la mousse se forme. Ces solutions étant complexes et exigeant des équipements coûteux, elles ne sont rentables que pour des consommations de plusieurs centaines de tonnes de composition adhésive aqueuse par an.

La demande WO 86/06328 décrit différents procédés de moussage comportant une étape dans laquelle est ajouté à la solution ou l'émulsion de polymère, un sel (de préférence un carbonate) qui génère un gaz (de préférence du dioxyde de carbone), quand un acide est ajouté à la solution ou l'émulsion de polymère. Ce procédé conduit à un moussage instantané dès que l'acide est ajouté au mélange mais ce procédé de moussage est difficilement contrôlable.

La demande WO 2009/071628 décrit un procédé pour appliquer une colle aqueuse bicomposante constituée de deux solutions ou dispersions aqueuses de polymères, dans lequel :

a) une première solution ou dispersion aqueuse de polymère présentant un pH supérieur à 6 et contenant un sel dissous ou dispersé est introduite dans un premier récipient, celle-ci permettant de libérer un gaz à une pression de 1,01 bar (1 atm) lorsqu'elle est combinée avec une solution acide de pH inférieur à 5,

b) une seconde solution ou dispersion aqueuse de polymère de pH inférieur à 5 contenant un acide est introduite dans un second récipient,

c) la première solution a) et la seconde solution b) de polymère(s) ou dispersion(s) aqueuse(s) sont combinées dans un récipient étanche à la pression et disposant d'une soupape de sortie,

d) les polymères en solution ou une dispersion c) constituant la composition aqueuse adhésive sont mélangés puis le mélange ainsi obtenu est libéré du récipient étanche à la pression via la soupape d'échappement sur l'un des substrats à encoller de sorte que le gaz libéré par le sel dissous ou dispersé pendant et après l'étape c) forme des bulles de gaz dans la solution ou la dispersion aqueuse de polymère(s) c) et la fasse mousser en sortant de la vanne.

La solution décrite dans WO 2009/071628 nécessite un équipement supplémentaire de type « mousseur ou mixeur » en amont de l'encolleuse et une ventilation suffisante doit être prévue lorsque la colle moussée est appliquée sur le substrat.

Le but de la présente invention est donc de fournir une solution plus économique pour faire mousser des compositions adhésives aqueuses, y compris lors de l'utilisation de petites quantités de composition adhésive, c'est à dire ne nécessitant pas d'équipements supplémentaires et pouvant être mises en oeuvre de façon simple sur les encolleuses du marché et ce, tout en réduisant la quantité nécessaire de colle appliquée avec conservation des performances d'assemblage.

Les assemblages obtenus à l'aide des compositions de colle et du procédé d'encollage selon l'invention peuvent être utilisés dans de nombreux domaines, tels que les domaines de l'emballage, de la construction, de l'hygiène (notamment les non-tissés, ou le « tissue » en anglais) et le bois.

RESUME DE L'INVENTION

La présente invention concerne une composition adhésive aqueuse comprenant au moins une dispersion ou une solution d'au moins un polymère ou d'un copolymère obtenu à partir de monomères acryliques, méthacryliques, acrylates, méthacrylates, vinyliques, esters vinyliques, ou polyuréthanne, et au moins un tensioactif choisi parmi les tensioactifs anioniques et non ioniques, caractérisée en ce que :

- sa tension superficielle, mesurée à l'aide d'un goniomètre sur plaque de verre à 23°C et 49% d'humidité relative, va de 40 à 55° d'angle de contact moyen, et
- sa capacité d'expansion volumique va de 10 à 50%.

Selon un mode de réalisation de l'invention, l'angle de contact moyen est compris entre 40 et 45°.
Selon un mode de réalisation de l'invention, le pourcentage d'expansion volumique va de 25 à 45%.
Selon un mode de réalisation de l'invention, la composition adhésive comprend :

- au moins une solution ou une dispersion d'au moins un homopolymère d'acétate de vinyle ou d'au moins un copolymère comprenant au moins un monomère acétate de vinyle, de préférence au moins un homopolymère d'acétate de vinyle,
- au moins une solution ou une dispersion d'alcool(s) polyvinylique(s),
- au moins une charge minérale, de préférence choisie parmi le carbonate de calcium, le carbonate de magnésium, le sable, l'alumine, l'alumine hydratée, le silicate de magnésium, le silicate d'aluminium, le silicate de sodium, le silicate de potassium, le mica et la silice,
- au moins un tensio-actif non-ionique ou anionique, de préférence choisi parmi les alcools gras éthoxylés et/ou propoxylés, les alkyléther sulfates, les sulfonates.

De préférence, la composition adhésive selon l'invention comprend :

- de 10 à 40%, de préférence de 12 à 30% en poids de matière sèche par rapport au poids total de la composition adhésive d'au moins un homopolymère d'acétate de vinyle ou d'au moins un copolymère comprenant au moins un monomère acétate de vinyle, de préférence au moins un homopolymère d'acétate de vinyle,
- de 1 à 4%, de préférence de 1,5 à 3% en poids de matière sèche par rapport au poids total de la composition adhésive d'au moins un alcool polyvinylique,
- de 15 à 25% en poids d'au moins une charge minérale, de préférence choisie parmi le carbonate de calcium, le carbonate de magnésium, le sable, l'alumine, l'alumine hydratée, le silicate de magnésium, le silicate d'aluminium, le silicate de sodium, le silicate de potassium, le mica et la silice,

- de 0,5 à 1,5% en poids de matière sèche par rapport au poids total de la composition de tensio-actifs non-ionique(s) ou anionique(s), de préférence choisi parmi les alcools gras éthoxylés et/ou propoxylés et les alkyléther sulfates, les sulfonates,
- de 0,2 à 0,4% de dispersant(s) de charge, de préférence choisis parmi les polyacrylates d'ammonium ou de sodium,
- de 5 à 7% d'au moins un plastifiant.

Selon un mode de réalisation de l'invention, la composition adhésive présente une viscosité, mesurée au Viscosimètre Brookfield à 23°C RVT A6 20 tr/min, allant de 2300 mPa.s à 4500 mPa.s, de préférence allant de 2700 mPa.s à 3700 mPa.s.

Selon un mode de réalisation de l'invention, la composition adhésive présente une quantité d'extrait sec, mesurée après séchage à 110°C, allant de 40 à 65%, de préférence allant de 49 à 54% en poids par rapport au poids total de la composition.

La présente invention concerne également un procédé d'application d'une composition adhésive aqueuse selon l'invention sur un substrat, le procédé comprenant les étapes suivantes :

a) fourniture d'une encolleuse munie d'un premier rouleau A ayant un rayon R1 et d'un second moyen de cisaillement choisi parmi un second rouleau D ayant un rayon R2 et un racleur fixe, le premier rouleau étant distant du second moyen de cisaillement d'une distance $\delta g$, l'espace entre le rouleau A et le second moyen de cisaillement définissant un réservoir ouvert dans sa partie supérieure et délimité dans sa partie inférieure par l'ouverture de l'entrefer $\delta g$ ;
b) introduction de la composition adhésive aqueuse dans le réservoir situé entre le rouleau A et le second moyen de cisaillement ;
c) rotation du rouleau A à une vitesse angulaire $\omega 1$ non nulle et éventuellement du rouleau D à une vitesse angulaire $\omega 2$, les vitesses $\omega 1$ et $\omega 2$ étant choisies de façon à produire un foisonnement de la composition adhésive ;
d) passage de la composition adhésive foisonnée obtenue à l'issue de l'étape c) dans l'entrefer de distance $\delta g$ ;
e) application à l'aide du premier rouleau A de la composition adhésive foisonnée obtenue à l'issue de l'étape d) sur le substrat défilant à une vitesse V non nulle au contact du rouleau A.

Selon un mode de réalisation de l'invention, le second moyen de cisaillement est un second rouleau D ayant une vitesse angulaire $\omega 2$ et un rayon R2.

De préférence, dans le procédé d'application selon l'invention :

- la vitesse tangentielle $Vtang_1 = \omega 1 \times R1$ du rouleau A va de 0,5 à 3,3 m/s, de préférence de 1,5 à 2,5 m/s, et/ou
- la vitesse tangentielle $Vtang_2 = \omega 2 \times R2$ du second moyen de cisaillement va de 0 à 1,1 m/s, de préférence de 0,50 à 0,85 m/s, et/ou
- la distance $\delta g$ entre le premier rouleau A et le second moyen de cisaillement va de 0,10 à 0,75, de préférence de 0,25 à 0,50 mm, et/ou
- la vitesse de défilement V du substrat au contact du premier rouleau A va de 0,5 à 3,3 m/s, de préférence de 1,5 à 2,5 m/s.

Selon un mode de réalisation de l'invention, au moins un second substrat est appliqué à l'issue de l'étape e) d'application de la composition adhésive foisonnée.

Selon un mode de réalisation de l'invention, au moins un des substrats présente une surface au moins partiellement hydrophile.

Les avantages de la présente invention sont les suivants :

- la composition adhésive et le procédé d'encollage selon l'invention permettent de réduire la quantité (en g/m$^2$) de composition adhésive utilisée pour coller des objets,
- la composition adhésive et le procédé d'encollage selon l'invention ne nécessitent pas l'incorporation d'air ou de gaz ou de sel en amont du procédé d'encollage, ce qui nécessite des équipements supplémentaires,
- le procédé d'encollage selon l'invention ne nécessite pas l'utilisation d'un équipement particulier, notamment un équipement de type « mousseur ou mixeur » tel que décrit dans WO 2009/071628,
- la composition adhésive et le procédé d'encollage selon l'invention permettent d'obtenir des performances de collage conservées par rapport à une colle aqueuse classique non moussée,
- la composition et le procédé d'encollage selon l'invention permettent de réaliser des collages d'affiche sur substrat ou « lamination » présentant des performances satisfaisantes,
- le procédé d'encollage selon l'invention peut être mis en oeuvre de façon simple en mettant en oeuvre les encolleuses couramment disponibles sur le marché, sans nécessiter d'équipement supplémentaire,

- les assemblages obtenus par le procédé selon l'invention présentent une masse de composition adhésive réduite tout en ayant une solidité et des performances de collage satisfaisantes,
- l'assemblage obtenu à l'issue du procédé d'encollage peut être utilisé dans le domaine de l'emballage.

BREVE DESCRIPTION DES FIGURES

La figure 1 est un schéma représentant un dispositif de mesure de l'angle de contact par goniométrie.
La figure 2 est un schéma représentant un dispositif de mesure du pourcentage d'expansion volumique par le test de foisonnement.
La figure 3 est un schéma représentant le procédé d'encollage selon un mode de réalisation de l'invention.

DESCRIPTION DETAILLEE DE L'INVENTION

La présente invention concerne une composition adhésive aqueuse comprenant au moins une dispersion ou une solution d'au moins un polymère ou d'un copolymère obtenu à partir de monomères acryliques, méthacryliques, acrylates, méthacrylates, vinyliques, esters vinyliques, d'un polyuréthanne, ... et au moins un tensioactif choisi parmi les tensioactifs anioniques et non ioniques, cette composition étant caractérisée en ce que :

- sa tension superficielle, mesurée à l'aide d'un goniomètre sur plaque de verre à 23°C et 49% d'humidité relative, va de 40 à 55° d'angle de contact moyen, et
- sa capacité d'expansion volumique va de 10 à 50%, mesurée par le test de foisonnement décrit ci-dessous.

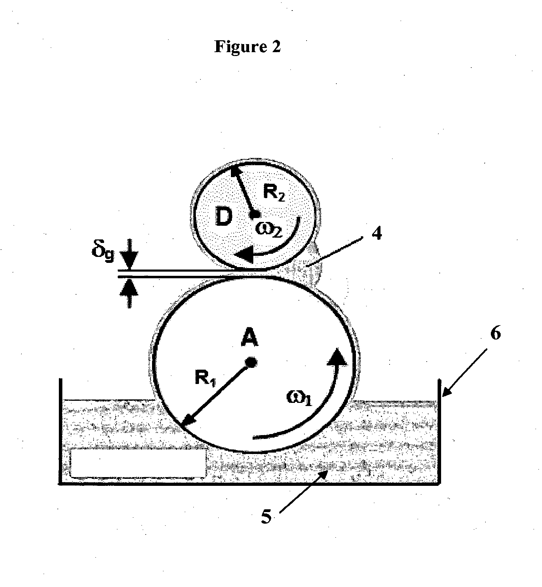

La capacité d'expansion volumique est $C_{ev} = (D1-D2/D1) \times 100$ dans laquelle D1 représente la densité de la composition avant l'étape de foisonnement, D2 représente la densité de la composition après l'étape de foisonnement, l'étape de foisonnement étant mise en oeuvre sur une encolleuse de laboratoire avec les paramètres machine suivants (en relation avec le schéma de la figure 2) :

- Diamètre R2 du cylindre supérieur D = 5,67 cm
- Vitesse angulaire $\omega 2$ du cylindre supérieur D = 0,5 m/s
- Diamètre R1 du cylindre supérieur A = 8,28 cm
- Vitesse angulaire $\omega 1$ du cylindre supérieur A = 0,7 m/s
- Ecart à l'entrefer $\delta g$ = 0,25 mm
- Volume du bac de colle = 600 g

la densité étant mesurée à l'aide d'un pycnomètre conforme à la Norme NFT 30-020 (équivalent ISO 2811) et une balance de précision au 1/10 de gramme.
Le test de foisonnement est effectué à température ambiante, de préférence à une température allant de 15 à 25°C, de préférence encore de 18 à 23°C.
L'angle de contact moyen est mesuré sur 10 gouttes de composition adhésive aqueuse avec un écart-type de $\pm$ 5°.
Les deux paramètres ci-dessus permettent de déterminer la capacité que possède la composition adhésive à former une mousse. En particulier ils permettent de déterminer la capacité d'une composition adhésive à former une mousse lorsqu'elle est soumise à un cisaillement, et en particulier lorsqu'elle est soumise à un procédé tel que décrit ci-dessous. Les méthodes de mesure de ces deux paramètres sont définies ci-dessous.

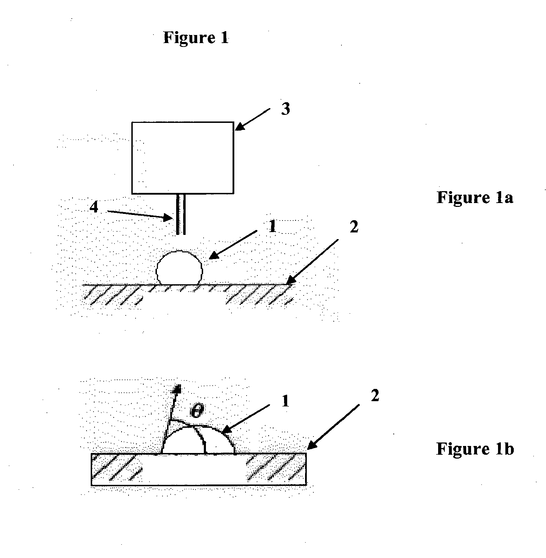

Mesure de l'angle de contact moyen par goniométrie (figure 1)

La mesure d'angle de contact $\theta$ rend compte de l'aptitude d'un liquide à s'étaler sur une surface par mouillabilité. La méthode consiste à mesurer l'angle formé entre la tangente du profil d'une goutte déposée sur le substrat et la surface du substrat. Elle permet de mesurer l'énergie de surface du liquide ou du solide. La mesure de l'angle de contact permet d'accéder à l'énergie libre d'une surface. Elle permet aussi de faire la distinction entre la nature polaire ou apolaire des interactions à l'interface liquide-solide. On peut ainsi déduire le caractère hydrophile ou hydrophobe d'une surface.
On mesure les énergies de surface du solide Ws, du liquide Wl, et l'énergie interfaciale solide liquide Wsl. Ces énergies tiennent compte de la texture de la surface du substrat (porosité et aspérité) et des interactions chimiques entre le substrat et le liquide. L'énergie de surface du liquide correspond à sa tension superficielle. L'énergie de surface du solide Ws est plus difficile à déterminer. Elle passe par l'énergie de surface critique Wc (approche de Zisman) qui est définie comme étant la limite au-delà de laquelle tout liquide de tension superficielle Wi, inférieure à Wc, peut s'étaler parfaitement sur le substrat. La relation cos(θ)=f(Wi) pour les différents liquides, induisant les différents angles de contact θ à l'interface liquide-substrat permet de calculer cette valeur d'énergie de surface critique. Au final, Wsl peut être alors déterminé comme suit :

$$Ws = Wl \times \cos(\theta) + Wsl$$

Wsl est un coefficient de mouillabilité. Le mouillage qui se produit lorsqu'une goutte d'un liquide s'étale à la surface d'un substrat dépend des tensions interfaciales liquide/air, liquide/substrat et air/substrat, qui sont elles-mêmes liées aux variations de l'angle de contact θ.

La figure 1 représente un schéma illustrant la méthode de mesure de l'angle de contact θ. Une goutte de composition adhésive aqueuse (1) est déposée sur la surface d'un substrat (2) (ici une plaque de verre totalement lisse). L'angle de contact θ à l'interface eau/verre est mesuré avec une précision de 1° dès le dépôt de la goutte au moyen d'un goniomètre (3) muni d'une micro-seringue (4). L'angle de contact est mesuré après dépôt de la goutte (1) de composition adhésive en 10 points différents de la plaque de verre (2). Les angles de contact sont mesurés sur les deux côtés de la goutte avec calcul de la valeur moyenne.

Mesure du pourcentage volumique d'expansion par le test de foisonnement (figure 2)

Le test de foisonnement est réalisé sur une encolleuse de laboratoire fabriqué par la Société JAGENBERG avec les paramètres machine suivants en relation avec le schéma de la figure 2 :

-   Diamètre R2 du cylindre supérieur D = 5,67 cm
-   Vitesse angulaire ω2 du cylindre supérieur D = 0,5 m/s
-   Diamètre R1 du cylindre supérieur A = 8,28 cm
-   Vitesse angulaire ω1 du cylindre supérieur A = 0,7 m/s
-   Ecart à l'entrefer δg = 0,25 mm
-   Volume du bac de colle = 600 g

Avant de lancer le test, on mesure la densité D1 de la composition adhésive aqueuse (5) qui est introduite dans le bac (6). Après 15 minutes de foisonnement, on prélève un échantillon dans le bourrelet de composition adhésive (4) et on mesure sa densité D2 à l'aide d'un pycnomètre.

*Mesure de la densité au pycnomètre*

Pour la mesure de la densité pour les produits visqueux, on utilise un pycnomètre métallique de 50 à 100 ml comportant un orifice d'écoulement de trop plein conforme à la Norme NFT 30-020 (équivalent ISO 2811) et une balance de précision au 1/10 de gramme.

Il s'agit ici de mesurer le poids de liquide occupant le volume du pycnomètre à 23°C à 0,1 g près. On opère comme suit :

-   Tarer le pycnomètre vide et sec sur la balance de précision au 1/10 de g près, soit T1
-   Ouvrir le pycnomètre et le remplir à ras bord avec le liquide dont on veut mesurer la densité, puis fermer le pycnomètre,
-   Essuyer le surplus de l'orifice d'écoulement avec un papier absorbant,
-   Peser à nouveau le pycnomètre, soit T2
-   On exprime les résultats comme suit :

    Densité (avec un pycnomètre de 100 ml) = T2 -T1 / 100
    Densité (avec un pycnomètre de 50 ml) = (T2- T1)x2 /100

On en déduit le pourcentage d'expansion de la colle aqueuse. Le pourcentage d'expansion est calculé à partir des densités mesurées D 1 et D2 par la relation suivante :

$$\% \text{ expansion} = 100 \times (1 - D2/D1)$$

Selon un mode de réalisation de l'invention, l'angle de contact moyen de la composition adhésive va de 40 à 45°.

Selon un mode de réalisation de l'invention, le pourcentage d'expansion de la composition adhésive va de 25 à 45%.

D'une manière générale, la composition peut comprendre tout polymère classiquement employé dans la formulation de colles aqueuses, notamment des homopolymères et copolymères obtenus à partir des monomères énumérés ci-dessus. Toutefois cette énumération n'est pas limitative et ces polymères peuvent en outre comprendre d'autres comonomères.

Par dispersion de polymère, on entend au sens de la présente invention, une émulsion ou une dispersion de polymère. De façon usuelle connue de l'homme du métier, dans une émulsion de polymère, le polymère est formé par polymérisation dans un solvant, de l'eau en général. De façon usuelle connue de l'homme du métier, dans une dispersion de polymère, le polymère, sous la forme d'une poudre redispersable, est redispersé en solution, dans l'eau en général. Avantageusement, le polymère est sous la forme d'une émulsion.

Selon un mode de réalisation de l'invention, le polymère ou le copolymère est un homopolymère d'acétate de vinyle ou un copolymère comprenant au moins un monomère acétate de vinyle. De préférence, le polymère est un homopolymère d'acétate de vinyle.

La composition peut comprendre tout tensioactif anionique ou non-ionique couramment utilisé pour produire des compositions moussantes.

Parmi les tensioactifs anioniques, on peut citer :

- les phosphates et alkylphosphates, tels que les monoalkylphosphates et les dialkyl phosphates, tels que tels que le mono-phosphate de lauryle, le sel de potassium de l'acide dodécyl-phosphorique, monoester et/ou di-ester d'acide octylphosphorique, monoester et/ou diester d'acide phophorique de 2-butyloctanol éthoxylé, le sel de potassium ou de triéthanolamine de monoalkyl (C12-C13) phosphate, le lauryl phosphate de potassium, le cétylphosphate de potassium,
- les carboxylates, tels que les amido éthercarboxylates (AEC), comme le lauryl amido éther carboxylate de sodium, les sels d'acides carboxyliques polyoxyéthylénés, comme le lauryl éther carboxylate de sodium (C12/14/16 65/25/10) oxyéthyléné, les sels d'acides gras (savons) ayant une chaîne alkyle en C6 à C22, neutralisés par une base organique ou minérale telle que la potasse, la soude, la triéthanolamine,la N-methyl glucamine, la lysine et l'arginine,
- les sulfosuccinates, tels que le mono-sulfosuccinate d'alcool laurylique (C12/C14 70/30) oxyéthyléné, le sel di-sodique d'un hemi-sulfosuccinate des alcools C12-C14, l'oléamidosulfosuccinate di-sodique oxyéthyléné, le mono-sulfosuccinate d'amide laurique oxyéthyléné, les sulfosuccinates de polydimethylsiloxane comme le disodium PEG-12 dimethicone sulfosuccinate,
- les dérivés des aminoacides, tels que les sels alcalins d'aminoacides, comme les sarcosinates, les alaninates, les glutamates, les aspartates, les dérivés de glycine (glycinates), les citrates,
- les alkyl sulfates, tels que le lauryl sulfate de triéthanolamine, le lauryl sulfate d'ammonium,
- les alkyl éther sulfates, tels que le lauryl éther sulfate de sodium, le lauryl éther sulfate d'ammonium,
- les sulfonates, tels que les alpha-oléfines sulfonates, les alkyl aryl sulfonates linéaires comme le xylène sulfonate de sodium,
- les iséthionates, tels que les acyliséthionates comme le cocoyl-iséthionate de sodium
- les taurates,
- les alkyl sulfoacétates, tels que le sel de sodium de méthyltaurate d'huile de palmiste,

et leurs mélanges.

De préférence, le tensioactif anionique est choisi parmi les alkyl éther sulfates, les sulfonates.

Parmi les tensioactifs non-ioniques, on peut citer :

- les alcools gras éthoxylés et/ou propoxylés,
- les alkyl polyglucosides (APG) et les alkyl polypentosides, tels que ceux contenant un groupe alkyle comportant de 6 à 30 atomes de carbone et de préférence de 8 à 16 atomes de carbone, et contenant un groupe glucoside ou pentoside comprenant de préférence 1,2 à 3 unités de glucoside ou pentoside,
- les esters de glycérol oxyalkylénés, tels que les dérivés polyoxyéthylénés des esters de glycéryle et d'acide gras et de leurs dérivés hydrogénés,
- les esters de sucre oxyalkylénés, tels que les éthers de polyéthylène glycol des esters d'acide gras et de sucre,

et leurs mélanges.

De préférence, le tensioactif non-ionique est choisi parmi les alcools gras éthoxylés et/ou propoxylés.

La composition adhésive peut en outre comprendre d'autres familles de tensio-actifs comme par exemple des tensioactifs amphotères tels que les alkyl amidopropyl bétaïnes ainsi que des co-tensioactifs comme les alcanolamides et les oxydes d'alkylamines.

Selon un mode de réalisation de l'invention, la composition adhésive aqueuse consiste essentiellement en :

- au moins une solution ou une dispersion aqueuse d'au moins un homopolymère d'acétate de vinyle ou d'au moins un copolymère comprenant au moins un monomère acétate de vinyle,
- au moins une solution ou une dispersion d'alcool(s) polyvinylique(s),
- au moins une charge minérale, de préférence choisie parmi le carbonate de calcium, le carbonate de magnésium, le sable, l'alumine, l'alumine hydratée, le silicate de magnésium, le silicate d'aluminium, le silicate de sodium, le silicate de potassium, le mica et la silice,
- au moins un tensio-actif non-ionique ou anionique, de préférence choisi parmi les alcools gras éthoxylés et/ou propoxylés, les alkyléther sulfates, les sulfonates.

De préférence, la composition adhésive aqueuse consiste essentiellement en :

- de 10 à 40%, de préférence de 15 à 30% en poids de matière sèche par rapport au poids total de la composition adhésive d'au moins un homopolymère d'acétate de vinyle ou d'au moins un copolymère comprenant au moins un monomère acétate de vinyle, de préférence un homopolymère d'acétate de vinyle,
- de 1 à 4%, de préférence de 1,5 à 3% en poids de matière sèche par rapport au poids total de la composition adhésive d'au moins un alcool polyvinylique,
- de 15 à 25% en poids d'au moins une charge minérale,
- de 0,5 à 1,5% en poids de tensio-actifs non-ionique(s) ou anionique(s), de préférence choisi parmi les alcools gras éthoxylés et/ou propoxylés et les alkyléther sulfates, les sulfonates,
- de l'eau.

Dans le cas où un copolymère comprenant au moins un monomère acétate de vinyle est utilisé dans la composition adhésive selon l'invention, un second monomère peut être choisi parmi l'éthylène, l'acide (méth)acrylique et ses esters, et des esters de l'acide maléique, de préférence le dibutylester de l'acide maléique.

Dans la composition adhésive, l'eau est apportée par la ou les solutions ou la ou les dispersions de polymère, mais aussi par la ou les solutions ou la ou les dispersions d'alcool(s) polyvinylique(s) et par un ajout d'eau éventuel. En effet, en fonction de la dilution des solutions ou des dispersions comprenant les matières actives, on peut être amené à ajouter de l'eau pour obtenir la concentration souhaitée en matière active.

Selon un mode de réalisation de l'invention, la quantité d'extrait sec dans les solutions et les dispersions de polymère mis en oeuvre dans l'invention, en particulier les solutions et les dispersions d'au moins un homopolymère d'acétate de vinyle ou d'au moins un copolymère comprenant au moins un monomère acétate de vinyle, va de 30 à 70% en poids, de préférence de 40 à 60% en poids par rapport au poids total de la solution ou de la dispersion.

Dans la présente invention, l'extrait sec désigne le solide restant après le séchage en continu de la composition aqueuse à une température de 110°C, la fin du séchage étant déterminé au moment où il n'y a plus de perte de poids supplémentaire. L'espèce volatile présente dans les dispersions et les solutions est majoritairement de l'eau.

Selon un mode de réalisation de l'invention, la viscosité des solutions et des dispersions de polymère mis en oeuvre dans l'invention, en particulier les solutions et les dispersions d'au moins un homopolymère d'acétate de vinyle ou d'au moins un copolymère comprenant au moins un monomère acétate de vinyle va de 30000 mPa.s à 52000 mPa.s, de préférence de 35000 à 45000 mPa.s. La viscosité est mesurée avec un Viscosimètre Brookfield à 23°C RVT A6 à 20 tours/minute.

Selon un mode de réalisation de l'invention, la quantité d'extrait sec dans les solutions et les dispersions d'alcool(s) polyvinylique(s) mises en oeuvre dans l'invention va de 16 à 20% en poids par rapport au poids total de la solution ou dispersion d'alcool(s) polyvinylique(s). De préférence, ces solutions et ces dispersions sont obtenues par dissolution ou par dispersion de poudre d'alcool(s) polyvinylique(s) dans l'eau, avantageusement avec des alcools polyvinyliques de degré d'hydrolyse allant de 86 à 89%.

Selon un mode de réalisation de l'invention, la viscosité des solutions et des dispersions d'alcool(s) polyvinylique(s) mises en oeuvre dans l'invention, mesurée au Viscosimètre Brookfield à 23°C RVT A7 à 20 tours/minute, va de 45000 mPa.s à 80000 mPa.s, de préférence de 55000 à 65000 mPa.s.

Selon un mode de réalisation de l'invention, la ou les charges présentent une taille de particules inférieure ou égale à 38 $\mu$m, de préférence inférieure ou égale à 15 $\mu$m, avantageusement inférieure ou égale à 2 $\mu$m.

La composition adhésive aqueuse peut également comprendre d'autres additifs, tels que des dispersants de charge, des plastifiants, des biocides, des stabilisants de mousse, des colorants, des agents de contrôle de la rhéologie.

Lorsqu'il est présent dans la composition adhésive aqueuse, l'agent de contrôle de la rhéologie est de préférence un polymère de type acrylique ou de type polyuréthane hydrosoluble.

Selon un mode de réalisation de l'invention, la composition adhésive comprend :

- de 10 à 40%, de préférence de 15 à 30% en poids de matière sèche par rapport au poids total de la composition adhésive d'au moins un homopolymère d'acétate de vinyle ou d'au moins un copolymère comprenant au moins un monomère acétate de vinyle, de préférence un homopolymère d'acétate de vinyle,
- de 1 à 4%, de préférence de 1,5 à 3% en poids de matière sèche par rapport au poids total de la composition adhésive d'au moins un alcool polyvinylique,
- de 15 à 25% en poids d'au moins une charge minérale,
- de 0,5 à 1,5% en poids de tensio-actifs non-ionique(s) ou anionique(s), de préférence choisi parmi les alcools gras éthoxylés et/ou propoxylés et les alkyléther sulfates, les sulfonates,
- de 0,2 à 0,4% de dispersant(s) de charge, de préférence choisis parmi les polyacrylates d'ammonium ou de sodium,
- de 5 à 7% d'au moins un plastifiant.

Selon un mode de réalisation de l'invention, la composition adhésive consiste essentiellement en :

- 10 à 40%, de préférence 15 à 30% en poids de matière sèche par rapport au poids total de la composition adhésive d'au moins un homopolymère d'acétate de vinyle ou d'au moins un copolymère comprenant au moins un monomère acétate de vinyle, de préférence un homopolymère d'acétate de vinyle,
- 1 à 4%, de préférence de 1,5 à 3% en poids de matière sèche par rapport au poids total de la composition adhésive d'au moins un alcool polyvinylique,
- 15 à 25% en poids d'au moins une charge minérale,
- 0,5 à 1,5% en poids de tensio-actifs non-ionique(s) ou anionique(s), de préférence choisi parmi les alcools gras éthoxylés et/ou propoxylés et les n-alkyléther sulfates, les sulfonates,
- 0,2 à 0,4% de dispersant(s) de charge, de préférence choisis parmi les polyacrylates d'ammonium ou de sodium,
- de 5 à 7% d'au moins un plastifiant.

Selon un mode de réalisation de l'invention, la composition adhésive aqueuse présente les caractéristiques suivantes :

- une viscosité, mesurée au Viscosimètre Brookfield à 23°C RVT A4 à 20 tours/minute, allant de 2300 mPa.s à 4500 mPa.s, de préférence allant de 2700 mPa.s à 3700 mPa.s,
- une quantité d'extrait sec, mesurée après séchage à 110°C comme décrit ci-dessus, allant de 40 à 65%, de préférence allant de 49 à 54%,
- un pH allant de 6 à 9, de préférence de 6,5 à 8,5,
- une densité, mesurée au repos avant foisonnement, allant de 1,18 à 1,20.

De façon avantageuse, la composition adhésive selon l'invention comprend peu ou pas de composés connus comme antimousse, telles que des dispersions aqueuses d'huiles de silicone ou d'huiles minérales.
Préférentiellement, elle comprend moins de 100 ppm en poids de composés anti-mousse rapporté au poids total de la composition, de préférence moins de 50 ppm, encore mieux, moins de 20 ppm.
La composition adhésive aqueuse peut être préparée selon des méthodes connues de l'homme du métier, par exemple par simple mélange des constituants.
Un procédé de préparation de la composition adhésive peut comprendre les étapes suivantes :

- mélange de la charge avec de l'eau, en présence éventuellement d'un dispersant de charge pour obtenir un mélange homogène,
- introduction dans le mélange homogène des compositions de polymère, notamment de la ou des solutions ou de la ou des émulsions d'homopolymère(s) d'acétate de vinyle ou de copolymère(s) comprenant au moins un monomère acétate de vinyle et de la ou des solutions ou des émulsions d'alcool(s) polyvinylique(s), puis agitation,
- introduction des éventuelles additifs, tels que plastifiants, biocides, agents de contrôle de la rhéologie, puis agitation,
- introduction du ou des tensio-actifs, puis agitation.

La viscosité est ajustée avec la quantité d'eau résiduelle.
Une filtration peut être nécessaire à l'issue du mélange des constituants.
La présente invention propose également un procédé d'application d'une composition adhésive aqueuse telle que décrite ci-dessus sur un substrat, le procédé comprenant les étapes suivantes :

a) fourniture d'une encolleuse munie d'un premier rouleau A ayant un rayon R1 et d'un second moyen de cisaillement choisi parmi un second rouleau D ayant un rayon R2 et un racleur fixe, le premier rouleau étant distant du second moyen de cisaillement d'un entrefer correspondant à une distance δg, l'espace entre le rouleau A et le second moyen de cisaillement définissant un réservoir ouvert dans sa partie supérieure et délimité dans sa partie inférieure par l'ouverture de l'entrefer δg ;

b) introduction de la composition adhésive aqueuse dans le réservoir situé entre le rouleau A et le second moyen de cisaillement ;

c) rotation du rouleau A à une vitesse angulaire ω1 non nulle et éventuellement du rouleau D à une vitesse angulaire ω2, les vitesses ω1 et ω2 étant choisies de façon à produire un foisonnement de la composition adhésive ;

d) passage de la composition adhésive foisonnée obtenue à l'issue de l'étape c) dans l'entrefer δg ;

e) application à l'aide du premier rouleau A de la composition adhésive foisonnée obtenue à l'issue de l'étape d) sur le substrat défilant à une vitesse V non nulle au contact du rouleau A.

Le procédé d'encollage selon l'invention est caractérisé en ce que le bourrelet de composition adhésive aqueuse est foisonné (ou moussé) en continu entre le premier rouleau A et le second moyen de cisaillement de l'encolleuse grâce au mouvement du premier rouleau A ayant un rayon R1 (exprimé en m) et une vitesse angulaire ω1 ω1 (exprimé en rad/s). En effet, lors du démarrage du procédé d'encollage, il peut être nécessaire d'attendre un certain temps avant d'atteindre le régime continu pendant lequel le foisonnement a effectivement lieu. Ensuite, à l'issue du foisonnement, la composition adhésive moussée passe entre le premier rouleau A et le second moyen de cisaillement dans l'entrefer de distance δg (exprimée en mm), puis est appliquée à l'aide du rouleau A sur le substrat défilant à une vitesse V.

La vitesse tangentielle des rouleaux Vtang (exprimée en m/s) est donnée par la relation :

$$Vtang = Rn \times \omega n$$

Selon un mode de réalisation de l'invention, le procédé d'encollage est mis en oeuvre dans les conditions suivantes :

- une vitesse tangentielle $Vtang_1$= R1 x ω1 du rouleau A allant de 0,5 à 3,3 m/s, de préférence allant de 1,5 à 2,5 m/s, et/ou
- une vitesse tangentielle $Vtang_2$= R2 x ω2 du rouleau D allant de 0 à 1,1 m/s, de préférence allant de 0,50 à 0,85 m/s, et/ou
- une distance δg entre le premier rouleau A et le second moyen de cisaillement allant de 0,10 à 0,75 mm, de préférence de 0,25 à 0,50 mm, et/ou
- une vitesse de défilement V du substrat au contact du premier rouleau A allant de 0,5 à 3,3 m/s, de préférence allant de 1,5 à 2,5 m/s.

Selon un mode de réalisation, le procédé d'application selon l'invention est effectué à température ambiante, de préférence entre 15°C et 28°C, avantageusement entre 18°C et 23°C.

Le foisonnement est conditionné par trois paramètres applicatifs principaux que sont : la température, le gap et la vitesse différentielle qui résulte directement des vitesses tangentielles du cylindre enducteur et du second moyen de cisaillement (cylindre de dosage ou racleur). Le gap, la vitesse différentielle et la vitesse de défilement V ont une incidence directe sur le grammage (quantité de composition adhésive appliquée sur le substrat).

Le procédé d'encollage selon l'invention associé à la composition adhésive aqueuse selon l'invention permet une économie de composition adhésive appliquée, à surface encollée identique, de 10 à 50% en poids, de préférence de 20 à 40% en poids.

Selon un mode de réalisation de l'invention, le procédé selon l'invention est utilisé pour assembler des substrats à l'aide de la composition adhésive aqueuse. Des moyens connus permettant d'appliquer un second substrat peuvent être présents après l'étape e) du procédé selon l'invention, afin d'appliquer ce second substrat sur le premier substrat enduit de la colle moussée. Notamment, on peut prévoir que le substrat encollé déplacé au moyen d'un convoyeur à bande soit amené au contact du second substrat qui est appliqué à l'aide d'un troisième rouleau.

De préférence, au moins un des substrats présente une surface au moins partiellement hydrophile, c'est-à-dire qu'elle absorbe l'eau ou est mouillable par l'eau. Par exemple, le procédé d'encollage selon l'invention peut être mis en oeuvre pour réaliser un collage papier sur papier, papier sur carton, papier sur bois, papier sur film synthétique, de papier ou kraft (faces externes de plaque de plâtres) sur isolants (Polystyrène expansé, mousse de polyuréthane, fibres de verre ou de roche, etc), etc. Toutefois, la présente invention peut également être utilisée pour assembler des surfaces hydrophobes, si les conditions de séchage sont correctement maîtrisées.

Selon un mode de réalisation du procédé d'encollage décrit ci-dessus, le pourcentage d'expansion de la colle aqueuse va de 10 à 50%, de préférence de 25 à 45%. Ce pourcentage d'expansion peut être déterminé, comme décrit ci-dessus, en mesurant la densité D1 de la composition adhésive initiale avant foisonnement, puis la densité de la composition adhésive moussée D2, après passage dans l'entrefer de distance δg.

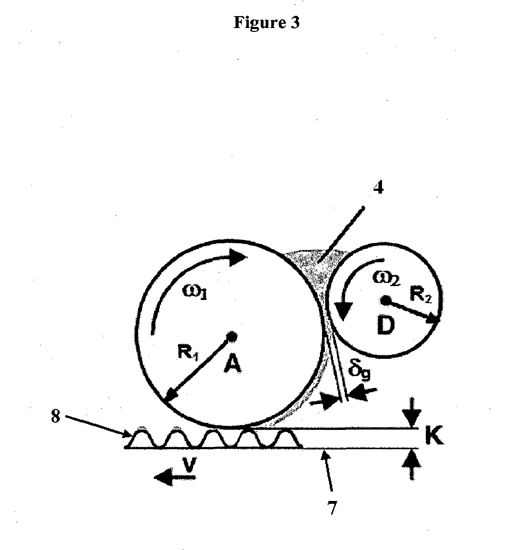

Selon un mode de réalisation de l'invention, le second moyen de cisaillement est un second rouleau D. La figure 3 est un schéma représentant ce mode de réalisation particulier du procédé d'encollage selon l'invention. Sur la figure 3, le substrat 7 présente des micro-cannelures 8 de hauteur K. La colle moussée est dans ce cas appliquée sur les crêtes des cannelures du substrat grâce au mouvement du rouleau A et au défilement dudit substrat à la vitesse de défilement V.

Les assemblages obtenus à l'aide du procédé d'encollage selon l'invention peuvent être utilisés dans de nombreux domaines, tels que les domaines de l'emballage, de l'hygiène (notamment les non-tissés ou le « tissue » en anglais) et de la construction.

EXEMPLES

L'invention est à présent décrite dans les exemples de réalisation suivants qui sont donnés à titre purement illustratif, et ne sauraient être interprétés pour en limiter la portée. Les compositions des exemples 1 et 2 selon l'invention ainsi que de l'exemple comparatif 3 (de référence) sont données en % en poids par rapport au poids total de la composition adhésive dans le tableau I ci-dessous :

Tableau 1 : Composition et pH des compositions adhésives aqueuse

|  | Exemple 1 | Exemple 2 | Exemple 3 |
|---|---|---|---|
| Emulsion d'acétate de vinyle I (% en poids de matière sèche) | 32,3% (18,1 à 18,6) | 32,3% (18,1 à 18,6) | 32,3% (18,1 à 18,6) |
| Emulsion d'acétate de vinyle II (% en poids de matière sèche) | 12% (5,9 à 6,1) | 12% (5,9 à 6,1) | 12% (5,9 à 6,1) |
| Solution d'alcool polyvinylique (% en poids de matière sèche) | 10,6% (1,7 à 2,1) | 10,6% (1,7 à 2,1) | 10,6% (1,7 à 2,1) |
| Carbonate de calcium | 20% | 20% | 20% |
| Tensio-actif | 0,6% | 1,2% | - |
| plastifiant | 6% | 6% | 6% |
| Dispersant de charge (Extrait sec allant de 40 à 50%) | 0,3 % | 0,3 % | 0,3 % |
| Conservateur | 0,1% | 0,1% | 0,1% |
| Eau | 18,1% | 17,5% | 18,7% |
| pH | 7,5 | 7,5 | 7,5 |

Les constituants sont les suivants :

- émulsion d'homopolymère d'acétate de vinyle I préparée selon le protocole décrit ci-dessous présentant un % d'extrait sec de 56 à 58%,
- émulsion d'homopolymère d'acétate de vinyle II préparée selon le protocole décrit ci-dessous présentant un % d'extrait sec de 49 à 51%,
- solution d'alcool polyvinylique préparée selon le protocole décrit ci-dessous présentant un % d'extrait sec de 16 à 20%,
- plastifiant : TRIACETIN® 1584 de EASTMAN,
- tensio-actif : DISPONIL® TLS 42 de COGNIS,
- carbonate de calcium : MICRONIC® P, de IMERYS Performance Minerals,
- conservateur : biocide ACTICIDE® MBL, de THOR
- dispersant de charge : ACUMER® 9300, de DOW CHEMICAL.

*Mesure de l'extrait des solutions d'alcool(s) polyvinylique au réfractomètre*

On utilise un réfractomètre à main OPL compatible avec le domaine d'extrait sec attendu (ici 16 à 20 %) dont l'échelle graduée indique directement le pourcentage de sec. La mesure est réalisée à 23°C avec une précision de ± 1 % en valeur absolue.

On prélève une goutte de la solution d'alcool(s) polyvinyliques à 23°C, on la dépose sur le prisme de référence et on rabat le prisme d'éclairage.

On se place face à la lumière et on lit directement le sec sur l'échelle graduée de l'oculaire à la séparation des plages sombre et éclairée.

*Préparation de la solution d'alcool polyvinylique*

On charge 1300 g d'eau déminéralisée et 6 g d'antimousse FOAMASTER® NXZ de BASF puis on introduit lentement en pluie sous agitation 357 g d'alcool polyvinylique 4/88 CELVOL® 540 de SKISUI. Après chargement, on chauffe lentement jusqu'à 90°C puis on maintient à cette température pendant 45 minutes. On lance le refroidissement du mélange et on ajoute 384 g d'eau et on mesure l'extrait sec au réfractomètre.

Quand la température est inférieure à 65°C, on charge 6 g de BIOCIDE® BT20 de PROGIVEN et on maintient sous agitation pendant 10 minutes.

On ajuste la viscosité entre 55000 et 65000 mPa.s (viscosimètre Brookfield à 23°C RVT A7 20 tr/min) à l'aide d'un ajout d'eau supplémentaire (environ 63 g) en respectant l'extrait sec de 16 à 20 %.

La quantité d'antimousse mesurée dans la composition est de 0,0017 % en poids.

On filtre le mélange à 1200 $\mu$m par gravité.

*Préparation de l'émulsion d'homopolymère d'acétate de vinyle I*

Dans 1700 g d'eau déminéralisée et 0,5 g d'antimousse DEHYDRAN® P3215, de BASF, on introduit lentement en pluie sous agitation 75 g de MOWIOL® 28/99 de KURARAY, 100 g de MOWIOL® 26/88 de KURARAY, 60 g de MOWIOL® 30/92 de KURARAY, 75 g de CELVOL® 830 de SEKISUI. Après chargement, on chauffe lentement jusqu'à 90°C puis on maintient à cette température pendant 30 minutes. On met en refroidissement et on ajoute 1780 g d'eau déminéralisée de manière à obtenir 3800 g d'émulsion d'homopolymère d'acétate de vinyle (I). Quand la température est inférieure à 45°C, on charge 2,5 g de NUOSEPT® 515 de PROGIVEN et on homogénéise sous agitation pendant 10 minutes.

On prépare une solution (III) en incorporant 7 g de tertiobutyl hydroperoxyde TRIGONOX® AW 70 de AKZO NOBEL (catalyseur de polymérisation) dans 150 g d'eau déminéralisée à température ambiante et sous agitation pendant 20 minutes.

On prépare une solution (IV) en incorporant 4 g de sel de sodium de dérivé d'acide sulphinique BRUGGOLITE® FF6M de BRÜGGEMANN Chemicals dans 20 g d'eau déminéralisée à température ambiante et sous agitation pendant 20 minutes jusqu'à dissolution complète.

On charge dans le réacteur de polymérisation les 3800 g d'émulsion d'homopolymère d'acétate de vinyle (I) solution et 450 g d'eau déminéralisée supplémentaire. On met le mélange sous agitation à 25 tr/mn et on chauffe pour 60°C. A 55°C, on charge dans l'ordre :

- 50 g de tensio-actif non-ionique REMCOPAL® IT 15/40 de CECA
- 3,5 g de Bicarbonate de Sodium
- 24 g de solution (IV) de sel de sodium de dérivé d'acide sulphinique et,
- 470 g d'acétate de vinyl monomère

Après 10 minutes, on ajoute 37 g de la solution de tertiobutyl hydroperoxyde (III) et on laisse l'exotherme se développer. A la fin de l'exotherme (dès le début de la chute de température), on commence les coulées simultanées de 4655 g d'acétate de vinyle monomère supplémentaires et des 120 g restant de la solution de tertiobutyl hydroperoxyde (III) sur 3 heures de manière à contrôler l'exotherme et maintenir la température en dessous de 95°C. A la fin des coulées, on maintient 1 heure à 95°C.

On lance le refroidissement du mélange sous agitation à 15 tr/mn et en dessous de 45°C, on ajoute 7,5 g de NUOSEPT® 515 et 20 g de ACTICIDE® L10 de THOR.

On ajuste la viscosité entre 35000 et 45000 mPa.s (viscosimètre brookfield à 23°C à 23°C RVT A7 20 tr/min) à l'aide d'un ajout d'eau supplémentaire en respectant l'extrait sec souhaité de 56 à 58 %.

*Préparation de l'émulsion d'homopolymère d'acétate de vinyle II*

Dans 1700 g d'eau déminéralisée et 0,5 g d'antimousse DEHYDRAN® P3215 de BASF puis on introduit lentement en pluie sous agitation 125 g de MOWIOL® 28/99 de KURARAY, 100 g de MOWIOL® 26/88 de KURARAY, 50 g de MOWIOL® 30/92 de KURARAY, 150 g de CELVOL® 830 de SEKISUI. Après chargement, on chauffe lentement jusqu'à 90°C puis on maintient à cette température pendant 30 minutes. On met en refroidissement et on ajoute 2375 g d'eau déminéralisée de manière à obtenir 4500 g d'émulsion d'homopolymère d'acétate de vinyle (II). Quand la température est inférieure à 45°C, on charge 2,5 g de NUOSEPT® 515 de PROGIVEN et on homogénéise sous agitation pendant 10 minutes.

On prépare une solution (V) en incorporant 5,5 g de tertiobutyl hydroperoxyde TRIGONOX® AW 70 de AKZO NOBEL (catalyseur de polymérisation) dans 195 g d'eau déminéralisée à température ambiante et sous agitation pendant 20 minutes.

On prépare une solution (VI) en incorporant 3 g de sel de sodium de dérivé d'acide sulphinique BRUGGOLITE® FF6M de BRÜGGEMANN Chemicals dans 10g d'eau déminéralisée à température ambiante et sous agitation pendant 20 minutes jusqu'à dissolution complète.

On charge dans le réacteur de polymérisation les 4500 g d'émulsion d'homopolymère d'acétate de vinyle (II) et 450 g d'eau supplémentaire. On met le mélange sous agitation à 25 tr/mn et on chauffe pour 60°C. A 55°C, on charge dans l'ordre :

- 23 g de Vinyl sulfonate de sodium,
- 3 g de Bicarbonate de Sodium,
- 13 g de solution (VI) de sel de sodium de dérivé d'acide sulphinique, et
- 630 g d'acétate de vinyl monomère.

Après 10 minutes, on ajoute 37 g de la solution de tertiobutyl hydroperoxyde (V) et on laisse l'exotherme se développer. A la fin de l'exotherme (dès le début de la chute de température), on commence les coulées simultanées de 3770 g d'acétate de vinyl monomère supplémentaires et les 163,5 g restant de la solution de tertiobutyl hydroperoxyde (V) sur environ 3 heures de manière à contrôler l'exotherme et maintenir la température en dessous de 95°C. A la fin des coulées, on maintient 1 heure à 95°C.

On lance le refroidissement du mélange sous agitation à 20 tr/mn et en dessous de 45°C, on ajoute 7,5 g de NUOSEPT® 515 et 20 g de ACTICIDE® L10 de THOR.

On ajuste la viscosité entre 35000 et 45000 mPa.s (viscosimètre brookfield à 23°C à 23°C RVT A7 20 tr/min) à l'aide d'un ajout d'eau supplémentaire (environ 10 g) en respectant l'extrait sec de 49 à 51 %.

Préparation des compositions adhésives aqueuses

Les compositions adhésives aqueuses des exemples 1 à 3 sont préparées selon le mode opératoire ci-dessous.

Dans un réacteur de 2 litres, on introduit 170 g d'eau prélevée sur la quantité suffisante nécessaire à la composition (18,1%, 17,5% et 18,7% sont respectivement nécessaire pour atteindre les 100% pour les exemples 1, 2 et 3) et 3 g de dispersant de charges ACUMER® 9300 de DOW CHEMICAL puis on introduit sous vive agitation 200 g de carbonate de calcium MICRONIC® P de YMERIS Performance Minerals. On laisse le milieu sous agitation pendant environ 10 minutes jusqu'à obtention d'un mélange homogène.

Puis on introduit successivement dans le mélange homogène ainsi obtenu les autres constituants de la formule comme suit :

- Les émulsions d'homopolymère d'acétate de vinyle I (323 g) et II (120 g) et la solution d'alcool polyvinylique 4/88 (106 g) puis on maintient environ 20 minutes sous agitation,
- Le plastifiant TRIACETIN® 1584 de EASTMAN (60 g) puis on maintient environ 10 minutes sous agitation,
- Le biocide ACTICIDE® MBL de THOR (1 g) puis on maintient environ 10 minutes sous agitation,
- pour les compositions des exemples 1 et 2, le tensio-actif DISPONIL® TLS 42 de COGNIS (3 à 6 g) puis on maintient environ 10 minutes sous agitation,

On ajuste la viscosité du mélange entre 3000 et 3300 mPa.s à 23°C avec la quantité résiduelle d'eau (environ 31 à 34 g) puis on filtre à 400 microns.

Mesure de l'angle de contact moyen

On mesure ensuite l'angle de contact moyen θ selon la méthode de mesure de l'angle de contact moyen par goniométrie telle que décrite ci-dessus et illustrée sur la figure 1. Les valeurs mesurées ainsi que les conditions sont indiquées dans le tableau II ci-dessous :

Tableau II : mesures de l'angle de contact moyen θ

|  | Exemple 1 | Exemple 2 | Exemple 3 |
|---|---|---|---|
| θ en degré | 51,9 | 42,5 | 60,7 |
| Ecart-type | ±2 | ±3 | ±5 |
| Température (°C) | 22,6 | 22,8 | 22,4 |
| Humidité relative (%) | 49 | 49 | 49 |

La composition adhésive selon l'exemple 3 (comparatif) présente un angle de contact élevé, en dehors de la gamme d'angles de contact satisfaisante pour la mise en oeuvre de la présente invention.

Mesure du pourcentage d'expansion volumique

On mesure le pourcentage d'expansion volumique selon le test de foisonnement tel que décrit ci-dessus et illustré sur la figure 2.

La densité D1 de la colle aqueuse est mesurée avant cisaillement. La densité D2 est mesurée après 15 minutes de foisonnement. La densité D2 permet de déterminer, en comparant avec la densité D1, la capacité de moussage de la colle. En effet, comme indiqué dans la présente invention, le pourcentage d'expansion volumique quantifie le moussage. Afin de déterminer la stabilité de la composition adhésive moussée, la densité D3 est mesurée sur une composition adhésive moussée après 15 minutes de repos.

Les résultats sont indiqués dans le tableau III ci-dessous :

Tableau III - Densités et pourcentage d'expansion

|  | Exemple 1 | Exemple 2 | Exemple 3 |
|---|---|---|---|
| Densité D1 | 1,184 | 1,184 | 1,19 |
| Densité D2 (% expansion) | 1,066 (10,0%) | 0,87 (36,8%) | 1,176 (0,7%) |
| Densité D3 (% expansion bis) | 1,108 (6,9%) | 0,944 (26,1%) | 1,184 (0,0%) |

Il ressort clairement que la composition selon l'exemple 3 comparatif ne présente pas un pourcentage d'expansion volumique satisfaisant, seulement 0,7% d'expansion juste après l'étape de cisaillement dans l'encolleuse alors que les compositions selon les exemples 1 et 2 présentent un pourcentage d'expansion volumique respectivement de 10% et de 36,8%.

Test de collage et caractérisation de la performance

On réalise une mesure de la vise de prise (VP) et une mesure du temps ouvert (TO) selon la méthode FIPAGO d'après la Norme NFT 76-501.

*Test d'évaluation de la vitesse de prise (VP)*

On évalue le temps fermé minimum pour atteindre (lors de l'arrachement du support par action directe de la pesanteur), une énergie de 50 mmKp (10 mJ) et ceci avec un temps ouvert fixé à 5 secondes. La vitesse de cohésion (ou de montée en cohésion) est évaluée sur un assemblage de 2 substrats cartonnés plans liés par la composition à tester.
On utilise comme matériau pour les 2 substrats un carton Kraft de grammage égal à 195 $g/m^2$ commercialisé par la Société STROHLEIN référencé 8283. On découpe dans ce carton 2 éprouvettes sous forme respectivement d'une bande rectangulaire de dimensions 200x30 mm et d'une feuille de dimensions 100x60 mm.
Les opérations suivantes sont réalisées dans une pièce maintenue à une température et une atmosphère contrôlées : 23 ± 1°C et 50 ± 5 % d'humidité relative.
On enduit préalablement la bande cartonnée 200x30 mm au moyen de la composition adhésive à tester à l'aide d'une barre de Meyer n°5 à la vitesse 7, de manière à obtenir un grammage de 50 ± 3 $g/m^2$. On utilise ensuite un appareil de mesure du pouvoir adhésif selon les normes de la Fédération Internationale des fabricants de Papier Gommés (FIPAGO PKL) commercialisé par la société STROHLEIN.
La feuille cartonnée 100x60 mm est immobilisée, selon un plan horizontal, sur un palier de l'appareil de mesure qui est solidaire d'un bras mobile capable d'effectuer un mouvement de balancier autour d'un pivot.

Une extrémité de la bande cartonnée 200x30 mm est, sur environ 2 cm de longueur, mise en contact manuellement, par son côté enduit de composition adhésive, avec un palier fixe lié à l'appareil, qui est co-planaire et adjacent au palier mobile précédent. La plus grande partie de la bande 200x30 mm est ensuite appliquée sur la feuille 100x60 mm et pressée uniformément sur cette dernière automatiquement, au moyen d'un dispositif de pressage de l'appareil qui consiste en un cylindre lesté animé d'un mouvement combiné de translation et de rotation. Ce pressage est opéré 5 secondes après l'enduction de la bande (temps ouvert).

L'assemblage adhésif ainsi constitué est rompu au bout d'un temps (exprimé en seconde) par le déclenchement d'un mouvement de balancier du bras mobile qui résulte dans l'éloignement rapide du palier mobile du palier fixe : ainsi les 2 substrats sont séparés, la feuille cartonnée restant liée au palier mobile et la bande cartonnée restant liée au palier fixe par son extrémité.

La vitesse de prise VP exprimée en seconde correspond au temps permettant d'obtenir une énergie de 50 mmKp (10 mJ).

Les résultats, indiqués dans le Tableau IV, montrent un temps fermé ou vitesse de prise acceptable, comprise entre 9 et 13 secondes pour les compositions adhésives aqueuses selon l'invention (exemples 1 et 2) comparativement aux 7 secondes de la composition adhésive comparative (exemple 3).

*Test d'évaluation du temps ouvert (TO)*

On évalue le temps ouvert minimum pour atteindre (lors de l'arrachement du support par action directe de la pesanteur), une énergie comprise entre 8 et 12 mmKp (80 et 120 mJ) et ceci avec un temps fermé de 5 secondes. Le principe et l'équipement sont identiques au test d'évaluation de la vitesse de prise (VP) si ce n'est qu'on programme ici un temps fermé à 5 secondes sur le relais temporisé et que l'on fait varier le temps ouvert jusqu'à obtenir un résultat compris entre 8 et 12 mmKp (80 et 120 mJ).

Les résultats, indiqués dans le Tableau IV, montrent un temps ouvert de 90 secondes pour les colles aqueuses selon l'invention (exemples 1 et 2) équivalent à la colle selon l'exemple 3.

Tableau IV : mesure de la vitesse de prise (VP) et du temps ouvert (TO)

|  | Exemple 1 | Exemple 2 | Exemple 3 |
|---|---|---|---|
| Vitesse de prise (en sec) | 9 | 13 | 7 |
| Temps ouvert (en sec) | 90 | 90 | 90 |

Les tests de collage effectués sur la composition de colle selon l'invention permettent de démontrer que le tensio-actif n'a pas d'influence négative sur les performances de collage.

En effet, une colle présentant une vitesse de prise d'environ 8 secondes est considérée comme une colle rapide. Ainsi, les compositions adhésives selon les exemples 1 et 2 (compositions adhésives selon l'invention, comprenant un tensio-actif) présentent des vitesses de prise tout à fait satisfaisantes, en comparaison avec la composition selon l'exemple 3 (composition adhésive hors de l'invention, sans tensio-actif).

Test de collage

Un test de collage utilisant le procédé d'application selon l'invention a été effectué avec la composition adhésive selon l'invention de l'exemple 1 dans un premier temps, puis avec la composition adhésive de référence de l'exemple 3 dans un deuxième temps.

Dans un premier temps, la composition de colle est déposée sur une encolleuse de laboratoire de la Société JAGENBERG.

Ensuite, la composition adhésive est foisonnée par un procédé tel que décrit ci-dessus et illustré sur la figure 3, pendant une durée de 15 minutes. Les paramètres de l'encolleuse sont les suivants :

- Diamètre R2 du cylindre supérieur D = 5,67 cm,
- Vitesse angulaire $\omega 2$ du cylindre supérieur D = 0,5 m/s,
- Diamètre R1 du cylindre supérieur A = 8,28 cm,
- Vitesse angulaire $\omega 1$ du cylindre supérieur A = 0,7 m/s,
- Ecart à l'entrefer $\delta g$ = 0,25 mm.

Après 15 minutes de foisonnement, la composition adhésive foisonnée est déposée sur un premier support rigide en carton ayant un grammage de 280g.

A la sortie, la quantité de colle déposée est mesurée à l'aide d'une balance de précision au dixième de gramme près.

Après 5 secondes, un second support de type carton Fipago est déposé sur le premier support rigide en carton encollé.

Après 10 secondes, le collage est évalué manuellement : les deux supports sont séparés manuellement et le faciès de rupture est observé.

Les résultats rassemblant le grammage et le faciès de rupture sont indiqués dans le tableau V ci-dessous.

Tableau V : grammage et faciès de rupture après le test de collage

| | Exemple 1 | Exemple 3 |
|---|---|---|
| Quantité de composition adhésive déposée après 15 minutes de foisonnement | 36 g/m$^2$ | 40 g/m$^2$ |
| Faciès de rupture | Défibrage | Défibrage |

Le test de collage montre que le procédé d'application de la composition adhésive selon l'invention permet de diminuer la quantité de composition adhésive appliquée sur un substrat.

Le test réalisé sur un faible grammage appliqué permet déjà d'obtenir un gain de 10% en poids par rapport à une composition adhésive de référence, ne comprenant pas de tensio-actif.

Le faciès de rupture indique que le foisonnement de la composition adhésive selon l'exemple 1 n'empêche pas l'obtention d'un collage identique à celui obtenu sans foisonnement (composition selon l'exemple 3).

**Revendications**

1. Composition adhésive aqueuse comprenant au moins une dispersion ou une solution d'au moins un polymère ou d'un copolymère obtenu à partir de monomères acryliques, méthacryliques, acrylates, méthacrylates, vinyliques, esters vinyliques, ou polyuréthanne, et au moins un tensioactif choisi parmi les tensioactifs anioniques et non ioniques, **caractérisée en ce que** :

   - sa tension superficielle, mesurée à l'aide d'un goniomètre sur plaque de verre à 23°C et 49% d'humidité relative, va de 40 à 55° d'angle de contact moyen, et
   - sa capacité d'expansion volumique va de 10 à 50%.

2. Composition selon la revendication 1, dans laquelle l'angle de contact moyen est compris entre 40 et 45°.

3. Composition selon la revendication 1 ou 2, dans laquelle le pourcentage d'expansion volumique va de 25 à 45%.

4. Composition selon l'une des revendications 1 à 3, comprenant :

   - au moins une solution ou une dispersion d'au moins un homopolymère d'acétate de vinyle ou d'au moins un copolymère comprenant au moins un monomère acétate de vinyle, de préférence au moins un homopolymère d'acétate de vinyle,
   - au moins une solution ou une dispersion d'alcool(s) polyvinylique(s),
   - au moins une charge minérale, de préférence choisie parmi le carbonate de calcium, le carbonate de magnésium, le sable, l'alumine, l'alumine hydratée, le silicate de magnésium, le silicate d'aluminium, le silicate de sodium, le silicate de potassium, le mica et la silice,
   - au moins un tensio-actif non-ionique ou anionique, de préférence choisi parmi les alcools gras éthoxylés et/ou propoxylés, les alkyléther sulfates, les sulfonates.

5. Composition selon l'une des revendications 1 à 4, comprenant :

   - de 10 à 40%, de préférence de 12 à 30% en poids de matière sèche par rapport au poids total de la composition adhésive d'au moins un homopolymère d'acétate de vinyle ou d'au moins un copolymère comprenant au moins un monomère acétate de vinyle, de préférence au moins un homopolymère d'acétate de vinyle,
   - de 1 à 4%, de préférence de 1,5 à 3% en poids de matière sèche par rapport au poids total de la composition adhésive d'au moins un alcool polyvinylique,
   - de 15 à 25% en poids d'au moins une charge minérale, de préférence choisie parmi le carbonate de calcium, le carbonate de magnésium, le sable, l'alumine, l'alumine hydratée, le silicate de magnésium, le silicate d'aluminium, le silicate de sodium, le silicate de potassium, le mica et la silice,

- de 0,5 à 1,5% en poids de matière sèche par rapport au poids total de la composition de tensio-actifs non-ionique(s) ou anionique(s), de préférence choisi parmi les alcools gras éthoxylés et/ou propoxylés et les alkyléther sulfates, les sulfonates,
- de 0,2 à 0,4% de dispersant(s) de charge, de préférence choisis parmi les polyacrylates d'ammonium ou de sodium,
- de 5 à 7% d'au moins un plastifiant.

6. Composition selon l'une des revendications 1 à 5, qui présente une viscosité, mesurée au Viscosimètre Brookfield à 23°C RVT A6 20 tr/min, allant de 2300 mPa.s à 4500 mPa.s, de préférence allant de 2700 mPa.s à 3700 mPa.s.

7. Composition selon l'une des revendications 1 à 6, qui présente une quantité d'extrait sec, mesurée après séchage à 110°C, allant de 40 à 65%, de préférence allant de 49 à 54% en poids par rapport au poids total de la composition.

8. Procédé d'application d'une composition adhésive aqueuse selon l'une quelconque des revendications 1 à 7 sur un substrat, le procédé comprenant les étapes suivantes :

a) fourniture d'une encolleuse munie d'un premier rouleau A ayant un rayon R1 et d'un second moyen de cisaillement choisi parmi un second rouleau D ayant un rayon R2 et un racleur fixe, le premier rouleau étant distant du second moyen de cisaillement d'une distance δg, l'espace entre le rouleau A et le second moyen de cisaillement définissant un réservoir ouvert dans sa partie supérieure et délimité dans sa partie inférieure par l'ouverture de l'entrefer δg ;
b) introduction de la composition adhésive aqueuse dans le réservoir situé entre le rouleau A et le second moyen de cisaillement ;
c) rotation du rouleau A à une vitesse angulaire $\omega 1$ non nulle et éventuellement du rouleau D à une vitesse angulaire $\omega 2$, les vitesses $\omega 1$ et $\omega 2$ étant choisies de façon à produire un foisonnement de la composition adhésive ;
d) passage de la composition adhésive foisonnée obtenue à l'issue de l'étape c) dans l'entrefer de distance δg ;
e) application à l'aide du premier rouleau A de la composition adhésive foisonnée obtenue à l'issue de l'étape d) sur le substrat défilant à une vitesse V non nulle au contact du rouleau A.

9. Procédé selon la revendication 7 dans lequel le second moyen de cisaillement est un second rouleau D ayant une vitesse angulaire $\omega 2$ et un rayon R2.

10. Procédé selon la revendication 8 ou 9, dans lequel :

- la vitesse tangentielle $Vtang_1 = \omega 1 x R1$ du rouleau A va de 0,5 à 3,3 m/s, de préférence de 1,5 à 2,5 m/s, et/ou
- la vitesse tangentielle $Vtang_2 = \omega 2 x R2$ du second moyen de cisaillement va de 0 à 1,1 m/s, de préférence de 0,50 à 0,85 m/s, et/ou
- la distance δg entre le premier rouleau A et le second moyen de cisaillement va de 0,10 à 0,75, de préférence de 0,25 à 0,50 mm, et/ou
- la vitesse de défilement V du substrat au contact du premier rouleau A va de 0,5 à 3,3 m/s, de préférence de 1,5 à 2,5 m/s.

11. Procédé selon l'une des revendications 8 à 10, dans lequel au moins un second substrat est appliqué à l'issue de l'étape e) d'application de la composition adhésive foisonnée.

12. Procédé selon la revendication 11, dans lequel au moins un des substrats présente une surface au moins partiellement hydrophile.


**Patentansprüche**

1. Wässrige Klebezusammensetzung, umfassend mindestens eine Dispersion oder eine Lösung aus mindestens einem Polymer oder einem Copolymer, erhalten aus Acryl-, Methacryl-, Acrylat-, Methacrylat-, Vinyl-, Vinylester- oder Polyurethanmonomeren, und mindestens einem Tensid, ausgewählt aus den anionischen und nicht-ionischen Tensiden, **dadurch gekennzeichnet, dass**:

- die Oberflächenspannung, gemessen mithilfe eines Winkelmessers auf einer Glasplatte bei 23 °C und 49 % relativer Feuchtigkeit, von 40 bis 55° mittlerem Kontaktwinkel reicht, und
- ihr Volumenausdehnungsvermögen von 10 bis 50 % reicht.

2. Zusammensetzung nach Anspruch 1, wobei der mittlere Kontaktwinkel im Bereich zwischen 40 und 45° liegt.

3. Zusammensetzung nach Anspruch 1 oder 2, wobei der Prozentsatz der Volumenausdehnung von 25 bis 45 % reicht.

4. Zusammensetzung nach einem der Ansprüche 1 bis 3, umfassend:

   - mindestens eine Lösung oder eine Dispersion aus mindestens einem Vinylacetathomopolymer oder mindestens einem Copolymer, das mindestens ein Vinylacetatmonomer, bevorzugt mindestens ein Vinylacetathomopolymer, umfasst,
   - mindestens eine Lösung oder eine Dispersion aus Polyvinylalkohol(en),
   - mindestens einen mineralischen Füllstoff, bevorzugt ausgewählt aus Calciumcarbonat, Magnesiumcarbonat, Sand, Aluminiumoxid, hydratisiertes Aluminiumoxid, Magnesiumsilicat, Aluminiumsilicat, Natriumsilicat, Kaliumsilicat, Glimmer und Siliciumdioxid,
   - mindestens ein nicht-ionisches oder anionisches Tensid, bevorzugt ausgewählt aus ethoxylierten und/oder propoxylierten Fettalkoholen, Alkylethersulfaten, Sulfonaten.

5. Zusammensetzung nach einem der Ansprüche 1 bis 4, umfassend:

   - 10 bis 40 Gew.-%, bevorzugt 12 bis 30 Gew.-% der Trockenmasse, bezogen auf das Gesamtgewicht der Klebezusammensetzung, mindestens eines Vinylacetathomopolymers oder mindestens eines Copolymers, das mindestens ein Vinylacetatmonomer, bevorzugt mindestens ein Vinylacetathomopolymer umfasst,
   - 1 bis 4 Gew.-%, bevorzugt 1,5 bis 3 Gew.-% der Trockenmasse, bezogen auf das Gesamtgewicht der Klebezusammensetzung, mindestens eines Polyvinylalkohols,
   - 15 bis 25 Gew.-% mindestens einen mineralischen Füllstoffs, bevorzugt ausgewählt aus Calciumcarbonat, Magnesiumcarbonat, Sand, Aluminiumoxid, hydratisiertes Aluminiumoxid, Magnesiumsilicat, Aluminiumsilicat, Natriumsilicat, Kaliumsilicat, Glimmer und Siliciumdioxid,
   - 0,5 bis 1,5 Gew.-% der Trockenmasse, bezogen auf das Gesamtgewicht der Zusammensetzung, nicht-ionisches oder anionisches Tensid bzw. nichtionische oder anionische Tenside, bevorzugt ausgewählt aus ethoxylierten und/oder propoxylierten Fettalkoholen und Alkylethersulfaten, Sulfonaten,
   - 0,2 bis 0,4 % eines Füllstoffdispersionsmittels bzw. mehrerer Füllstoffdispersionsmittel, bevorzugt ausgewählt aus Ammonium- oder Natriumpolyacrylaten,
   - 5 bis 7 % mindestens eines Weichmachers.

6. Zusammensetzung nach einem der Ansprüche 1 bis 5, die eine Viskosität, gemessen mit Brookfield-Viskosimeter bei 23 °C, RVT A6 20 U/Min., von 2.300 mPa.s bis 4.500 mPa.s, bevorzugt von 2.700 mPa.s bis 3.700 mPa.s aufweist.

7. Zusammensetzung nach einem der Ansprüche 1 bis 6, die eine Menge an Trockenextraktmenge, gemessen nach Trocknen bei 110 °C, aufweist, die von 40 bis 65 Gew.-%, bevorzugt von 49 bis 54 Gew.-%, bezogen auf das Gesamtgewicht der Zusammensetzung, reicht.

8. Verfahren zum Auftragen einer wässrigen Klebezusammensetzung nach einem der Ansprüche 1 bis 7 auf ein Substrat, wobei das Verfahren die folgenden Schritte umfasst:

   a) Bereitstellen einer Anleimmaschine, die mit einer ersten Walze A versehen ist, die einen Radius R1 aufweist, und mit einem zweiten Schermittel, ausgewählt aus einer zweiten Walze D, die einen Radius R2 aufweist, und einem fixierten Rakel, wobei die erste Walze von dem zweiten Schermittel mit einem Abstand δg beabstandet ist, wobei der Raum zwischen der Walze A und dem zweiten Schermittel einen Behälter definiert, der in seinem oberen Teil offen ist und in seinem unteren Teil durch die Öffnung des Luftspalts δg begrenzt ist;
   b) Einführen der wässrigen Klebezusammensetzung in den Behälter, der zwischen der Walze A und dem zweiten Schermittel liegt;
   c) Drehen der Walze A mit einer Winkelgeschwindigkeit ω1 nicht null und gegebenenfalls der Walze D mit einer Winkelgeschwindigkeit ω2, wobei die Geschwindigkeiten ω1 und ω2 derart ausgewählt sind, dass sie eine Volumenvergrößerung der Klebezusammensetzung erzeugen;
   d) Übertragen der am Ende von Schritt c) erhaltenen volumenvergrößerten Klebezusammensetzung in den Luftspalt mit Abstand δg;

e) Auftragen, mithilfe der ersten Walze A, der am Ausgang von Schritt d) erhaltenen volumenvergrößerten Klebezusammensetzung auf das Substrat, das mit einer Geschwindigkeit V nicht null in Kontakt mit der Walze A vorbeiläuft.

9. Verfahren nach Anspruch 7, wobei das zweite Schermittel eine zweite Walze D ist, die eine Winkelgeschwindigkeit ω2 und einen Radius R2 aufweist.

10. Verfahren nach Anspruch 8 oder 9, wobei:

- die Tangentialgeschwindigkeit Vtang$_1$ = ω1xR1 der Walze A von 0,5 bis 3,3 m/s, bevorzugt von 1,5 bis 2,5 m/s reicht, und/oder
- die Tangentialgeschwindigkeit Vtang$_2$ = ω2xR2 des zweiten Schermittels von 0 bis 1,1 m/s, bevorzugt von 0,50 bis 0,85 m/s reicht, und/oder
- der Abstand δg zwischen der ersten Walze A und dem zweiten Schermittel von 0,10 bis 0,75, bevorzugt von 0,25 bis 0,50 mm reicht, und/oder
- die Laufgeschwindigkeit V des Substrats in Kontakt mit der ersten Walze A von 0,5 bis 3,3 m/s, bevorzugt von 1,5 bis 2,5 m/s reicht.

11. Verfahren nach einem der Ansprüche 8 bis 10, wobei am Ende von Schritt e) zum Auftragen der volumenvergrößerten Klebezusammensetzung mindestens ein zweites Substrat aufgetragen wird.

12. Verfahren nach Anspruch 11, wobei mindestens eines der Substrate eine mindestens teilweise hydrophile Oberfläche aufweist.

**Claims**

1. Aqueous adhesive composition comprising at least one dispersion or one solution of at least one polymer or of one copolymer obtained starting from acrylic, methacrylic, acrylate, methacrylate or vinyl, vinyl esters, or polyurethane monomers, and at least one surfactant chosen from the anionic and non-ionic surfactants, **characterized in that**:

- its surface tension, measured using a goniometer on a glass plate at 23°C and 49% relative humidity, ranges from 40 to 55° of average contact angle, and
- its volume expansion capacity ranges from 10 to 50%.

2. Composition according to claim 1, wherein the average contact angle is comprised between 40 and 45°.

3. Composition according to claim 1 or 2, wherein the percentage of volume expansion ranges from 25 to 45%.

4. Composition according to one of claims 1 to 3, comprising:

- at least one solution or one dispersion of at least one vinyl acetate homopolymer or of at least one copolymer comprising at least one vinyl acetate monomer, preferably at least one vinyl acetate homopolymer,
- at least one solution or one dispersion of polyvinyl alcohol(s),
- at least one mineral filler, preferably chosen from calcium carbonate, magnesium carbonate, sand, alumina, hydrated alumina, magnesium silicate, aluminum silicate, sodium silicate, potassium silicate, mica and silica,
- at least one non-ionic or anionic surfactant, preferably chosen from ethoxylated and/or propoxylated fatty alcohols, alkyl ether sulphates, sulphonates.

5. Composition according to one of claims 1 to 4, comprising:

- from 10 to 40%, preferably from 12 to 30% by weight of dry matter with respect to the total weight of the adhesive composition, of at least one vinyl acetate homopolymer or of at least one copolymer comprising at least one vinyl acetate monomer, preferably at least one vinyl acetate homopolymer,
- from 1 to 4%, preferably from 1.5 to 3% by weight of dry matter with respect to the total weight of the adhesive composition, of at least one polyvinyl alcohol,
- from 15 to 25% by weight of at least one mineral filler, preferably chosen from calcium carbonate, magnesium carbonate, sand, alumina, hydrated alumina, magnesium silicate, aluminum silicate, sodium silicate, potassium silicate, mica and silica,

- from 0.5 to 1.5% by weight of dry matter with respect to the total weight of the composition, of (a) non-ionic or anionic surfactant(s), preferably chosen from ethoxylated and/or propoxylated fatty alcohols and alkyl ether sulphates, sulphonates,
- from 0.2 to 0.4% of filler dispersing agent(s), preferably chosen from ammonium or sodium polyacrylates,
- from 5 to 7% of at least one plasticizer.

6. Composition according to one of claims 1 to 5, which has a viscosity, measured on a Brookfield Viscometer at 23°C RVT A6 20 rpm, ranging from 2300 mPa.s to 4500 mPa.s, preferably ranging from 2700 mPa.s to 3700 mPa.s.

7. Composition according to one of claims 1 to 6, which has a quantity of dry extract, measured after drying at 110°C, ranging from 40 to 65%, preferably ranging from 49 to 54% by weight with respect to the total weight of the composition.

8. Method for applying an aqueous adhesive composition according to any one of claims 1 to 7 onto a substrate, the method comprising the following steps:

   a) providing a pasting machine equipped with a first roller A, having a radius R1, and a second shear means chosen from a second roller D, having a radius R2, and a fixed scraper, the first roller being distanced from the second shear means by a distance $\delta g$, the space between the roller A and the second shear means defining a reservoir which is open in its upper part and delimited in its lower part by the opening of the gap $\delta g$;

   b) introducing the aqueous adhesive composition into the reservoir situated between the roller A and the second shear means;

   c) rotating the roller A at a non-zero angular speed $\omega 1$ and optionally the roller D at an angular speed $\omega 2$, the speeds $\omega 1$ and $\omega 2$ being chosen so as to produce an expansion of the adhesive composition;

   d) passing the expanded adhesive composition obtained at the end of step c) into the gap of distance $\delta g$;

   e) applying, using the first roller A, the expanded adhesive composition obtained at the end of step d) onto the substrate moving at a non-zero speed V in contact with the roller A.

9. Process according to claim 7, wherein the second shear means is a second roller D having an angular speed $\omega 2$ and a radius R2.

10. Method according to claim 8 or 9, wherein:

   - the tangential speed $Vtang_1 = \omega 1 \times R1$ of the roller A ranges from 0.5 to 3.3 m/s, preferably from 1.5 to 2.5 m/s, and/or
   - the tangential speed $Vtang_2 = \omega 2 \times R2$ of the second shear means ranges from 0 to 1.1 m/s, preferably from 0.50 to 0.85 m/s, and/or
   - the distance $\delta g$ between the first roller A and the second shear means ranges from 0.10 to 0.75, preferably from 0.25 to 0.50 mm, and/or
   - the speed of movement V of the substrate in contact with the first roller A ranges from 0.5 to 3.3 m/s, preferably from 1.5 to 2.5 m/s.

11. Process according to one of claims 8 to 10, wherein at least one second substrate is applied at the end of step e) of applying the expanded adhesive composition.

12. Process according to claim 11, wherein at least one of the substrates has a surface which is at least partially hydrophilic.

Figure 1

Figure 1a

Figure 1b

Figure 2

Figure 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 887078 A
- WO 8606328 A
- WO 2009071628 A